(19) Europäisches Patentamt
European Patent Office
Office européen des brevets

(11) **EP 1 608 461 B1**

(12) **EUROPÄISCHE PATENTSCHRIFT**

(45) Veröffentlichungstag und Bekanntmachung des Hinweises auf die Patenterteilung:
**21.10.2009 Patentblatt 2009/43**

(21) Anmeldenummer: **04723903.3**

(22) Anmeldetag: **27.03.2004**

(51) Int Cl.:
*B01J 29/70* (2006.01)     *B01J 29/74* (2006.01)
*B01J 37/03* (2006.01)     *C10G 45/64* (2006.01)
*C01B 39/42* (2006.01)

(86) Internationale Anmeldenummer:
**PCT/EP2004/003283**

(87) Internationale Veröffentlichungsnummer:
**WO 2004/087315 (14.10.2004 Gazette 2004/42)**

(54) **SYNTHETISCHER ZEOLITH, INSBESONDERE FÜR DIE KATALYTISCHE HYDROISOMERISIERUNG VON HÖHEREN PARAFFINEN**

SYNTHETIC ZEOLITE, IN PARTICULAR FOR CATALYTIC HYDROISOMERIZATION OF HIGHER PARAFFINS

ZEOLITE SYNTHETIQUE, EN PARTICULIER POUR L'HYDROISOMERISATION CATALYTIQUE DE PARAFFINES SUPERIEURES

(84) Benannte Vertragsstaaten:
**AT BE BG CH CY CZ DE DK EE ES FI FR GB GR HU IE IT LI LU MC NL PL PT RO SE SI SK TR**

(30) Priorität: **01.04.2003 DE 10314753**

(43) Veröffentlichungstag der Anmeldung:
**28.12.2005 Patentblatt 2005/52**

(73) Patentinhaber: **SÜD-CHEMIE AG
80333 München (DE)**

(72) Erfinder:
• **BURGFELS, Götz
83043 Bad Aibling (DE)**
• **KURTH, Volker
83043 Bad Aibling (DE)**
• **REIMER, Alfred
93437 Furth im Wald (DE)**
• **SCHMIDT, Friedrich
83024 Rosenheim (DE)**
• **WELLACH, Stephan
85617 Assling (DE)**

(74) Vertreter: **Heinemann, Monica
Abitz & Partner
Patentanwälte
Postfach 86 01 09
81628 München (DE)**

(56) Entgegenhaltungen:
**WO-A-20/04046034     US-A- 3 970 544**

• **KATOVIC A. AND GIORDANO G.: "Preliminary Study of ZSM-12 Zeolite Synthesis" CHEMISTRY EXPRESS, Bd. 6, Nr. 12, 1991, Seiten 969-972, XP009033372 in der Anmeldung erwähnt**
• **TOKTAREV A.V. AND IONE K.G.: "Studies on Crystallization of ZSM-12 Type Zeolite" STUDIES IN SURFACE SCIENCE AND CATALYSIS, Bd. 105, 1997, Seiten 333-339, XP002287564**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft einen Zeolith vom ZSM-12 Typ, einen Katalysator, welcher sich insbesondere für die Hydroisomerisierung höherer Paraffine eignet, ein Verfahren zur Herstellung eines solchen Zeoliths vom ZSM-12 Typ bzw. eines solchen Katalysators, sowie die Verwendung des Katalysators.

Die Isomerisierung von Paraffinen gehört zu den wichtigsten Raffinerieprozessen. Jüngste Beschränkungen durch den Gesetzgeber bei der Verwendung von Aromaten und Methyl-tert-Butylether in Fahrbenzin machen vor allem die Isomerisierung höherer Paraffine (größer als $C_5$) zu einer der wichtigsten Alternativen zur Erhöhung der Oktanzahl im Fahrbenzin. Dies gilt insbesondere für die Isomerisierung von $C_8$-Paraffinen.

Bislang waren solche Isomerisierungen wegen der zu geringen Selektivität, also wegen der Bildung großer Mengen an Crack-Produkten, nicht durchführbar.

In jüngerer Zeit sind eine Reihe von Untersuchungen zur Verwendung von Zeolithen als Katalysatoren für die Hydroisomerisierung und das Hydrocracken von höheren Paraffinen durchgeführt worden. So berichten W. Zhang und P.G. Smirniotis (J. Catal. 182, 400-416 (1999)) über den Einfluss der Zeolithstruktur und deren Azidität auf die Selektivität und den Reaktionsmechanismus für die Hydroisomerisierung bzw. das Hydrocracken von n-Oktan. Als Katalysatoren wurden ZSM-12, USY sowie β-Zeolith mit verschiedenen Si/Al-Verhältnissen untersucht. Bei der Synthese der ZSM-12 Zeolithe wird durch Dealuminieren mit Salzsäure Aluminium aus dem Zeolith entfernt, um ein bestimmtes Si/Al-Verhältnis einzustellen. Die so hergestellten Zeolithe wurden auf ihre Oberflächenazidität und ihre katalytische Aktivität untersucht. Bei Temperaturen von mehr als 290°C wird n-Oktan bei Konversionsraten von etwa 50% mit Selektivitäten von 27 bis 41% zu Isooktanen umgesetzt.

A. Katovic und G. Giordano (Chemistry Express, Vol. 6, No. 12, 969-972 (1991)) beschreiben die Synthese von ZSM-12 Zeolithen aus dem folgenden Hydrogelsystem: x $Na_2O$ : y TEABr : z $Al_2O_3$ : 50 $SiO_2$ : 1000 $H_2O$ (wobei 2,5<x<7,5; 3,5<y<10 und 0<z< 1). Bei der Herstellung von ZSM-12 unter Verwendung von Fällungskieselsäure wurde ein Verhältnis $Na_2O/SiO_2$ = 0,1, ein Verhältnis $TEABr/SiO_2$ = 0,2 und ein Verhältnis $SiO_2/Al_2O_3$ = 100 verwendet. Um reines, kristallines (Na-TEA)-ZSM-12 zu erhalten, werden die folgenden Bedingungen empfohlen: Si/Al im Bereich von 50, $OH^-/TEA^+$ im Bereich von 1 sowie $H_2O/OH^-$ im Bereich von 100.

In der US 5,800,801 wird ein MTW-Zeolith, ein Verfahren zu dessen Herstellung sowie dessen Verwendung beim Cracken von Kohlenwasserstoffen beschrieben. Der MTW-Zeolith wird auch als ZSM-12 Zeolith bezeichnet. Der Zeolith weist ein bestimmtes Röntgenbeugungsmuster auf, sowie eine spezifische Oberfläche von mehr als 300 $m^2/g$. Für die Herstellung des MTW-Zeolithkatalysators wird eine wässrige Lösung von Natriumsilicat hergestellt, zu welcher eine Lösung aus Tetraethylammoniumhydroxid sowie eine wässrige Lösung von Aluminiumnitrat gegeben wird, wobei die Mengen der einzelnen Komponenten so gewählt werden, dass gilt: $SiO_2/Al_2O_3$: > 120; $TEA^+/SiO_2$: 0,2 - 0,95; $H_2O/SiO_2$: 20 - 300; $OH^-/SiO_2$: 0,4 - 0,7.

TOKTAREV A.V. UND IONE K.G.: "Studies on Crystallization of ZSM-12 Type Zeolite" STUDIES IN SURFACE SCIENCE AND CATALYSIS, Bd. 105, 1997, Seiten 333-339 beschreiben die Bildung von ZSM-12 Zeolith in einem Aluminosilicatsystem in Anwesenheit von $N(Et)_4$ Br als organisches Templat. Der Einfluss der Silicaquelle, der Konzentration der chemischen Komponenten im Reaktionsgemisch, der Elemente außer Aluminium sowie der Parameter der Hydrothermalsynthese auf die Phasenzusammensetzung des Produktes wurden untersucht.

In der US 3,970,544 und der DE 22 13 109 C2 werden ZSM-12 Zeolithe beschrieben, Verfahren zu deren Herstellung sowie deren Verwendung zur Umwandlung von Kohlenwasserstoffen. Das Verhältnis $SiO_2/Al_2O_3$ liegt bei den beschriebenen ZSM-12 Zeolithen zwischen 49 und 300. In den Beispielen wird kolloidales Siliciumoxid als Siliciumquelle verwendet.

Bei der Hydroisomerisierung höherer Paraffine entstehen große Mengen an niedermolekularen Crack-Produkten. Diese Nebenreaktionen werden in der Regel durch hohe Temperaturen begünstigt, welche benötigt werden, um technisch ausreichende Konversionsraten zu erreichen.

Der Erfindung liegt daher die Aufgabe zugrunde, einen Zeolith vom ZSM-12 Typ zur Verfügung zu stellen, welcher sich insbesondere für die Verwendung in einem Katalysator eignet, wie er etwa für die Hydroisomerisierung höherer Paraffine verwendet wird. Der Erfindung liegt als weitere Aufgabe zugrunde, einen Katalysator zur Verfügung zu stellen, welcher insbesondere bei der Hydroisomerisierung höherer Paraffine zu höheren Ausbeuten an Isoparaffinen führt, und auch bei anderen Umsetzungen von Kohlenwasserstoffen vorteilhafte Ergebnisse liefert.

Diese Aufgabe wird mit einem Zeolith vom ZSM-12 Typ gemäß Anspruch 1 gelöst. Vorteilhafte Weiterbildungen des Zeoliths vom ZSM-12 Typ sind Gegenstand der abhängigen Patentansprüche. Ferner wird durch die Erfindung ein Katalysator zur Verfügung gestellt, welcher den erfindungsgemäßen Zeolith vom ZSM-12 Typ enthält. Vorteilhafte Weiterbildungen dieses Katalysators sind Gegenstand der vom Patentanspruch 8 abhängigen Patentansprüche.

Es wurde überraschend gefunden, dass bei Einhaltung einer Kombination bestimmter Merkmale bei der Synthese besonders vorteilhafte Zeolithe erhalten werden können, die sich beispielsweise insbesondere für eine Verwendung in Katalysatoren zur Hydroisomerisierung höherer Paraffine bei hoher Aktivität und gutem Umsatz eignen, wobei die Umsetzung auch bei verhältnismäßig geringen Temperaturen durchgeführt werden kann.

Gegenstand der Erfindung ist daher zunächst ein Zeolith vom ZSM-12 Typ, insbesondere für die Verwendung in Katalysatoren für die Hydroisomerisierung höherer Paraffine, welcher

(a) eine Primärkristallitgröße von < 0,1 $\mu$m;

(b) ein durch Quecksilberporosimetrie bei einem maximalen Druck von 4000 bar ermitteltes spezifisches Volumen von 30 - 200 mm$^3$/g in einem Porenradienbereich von 4 - 10 nm aufweist; und welcher weiter

(c) hergestellt ist unter Rühren aus einer Synthesegelzusammensetzung mit

c1) einer Aluminiumquelle

c2) Fällungskieselsäure als Siliciumquelle

c3) TEA$^+$ als Templat

c4) eine Alkali- und/oder Erdalkalimetallionenquelle M mit der Wertigkeit n;

c5) in welcher das molare Verhältnis $H_2O : SiO_2$ zwischen 5 und 15 gewählt ist.

Der erfindungsgemäße Zeolith vom ZSM-12 Typ zeichnet sich durch eine besonders hohe Porosität aus. Dies äußert sich deutlich im durch Quecksilberporosimetrie bestimmten spezifischen Porenvolumen, insbesondere wenn dies in Bezug zum Porenradius gesetzt wird. Der erfindungsgemäße Zeolith vom ZSM-12 Typ zeigt bei der Quecksilberporosimetrie in einem Porenradienbereich von 4 - 10 nm ein spezifisches Volumen von etwa 30 bis 200 mm$^3$/g, bevorzugt etwa 80 - 150 mm$^3$/g, insbesondere bevorzugt etwa 100 - 130 mm$^3$/g. ZSM-12 Zeolithe, die unter Verwendung kolloidaler Kieselsäure hergestellt wurden, zeigen in diesem Porenradienbereich ein deutlich geringeres spezifisches Porenvolumen auf. Typische Werte für einen Porenradienbereich von 4 - 10 nm liegen im Bereich von etwa 3 mm$^3$/g. In einem Porenradienbereich von 10 - 100 nm besitzt der erfindungsgemäße Zeolith vom ZSM-12 Typ ein spezifisches Porenvolumen von etwa 70 - 700 mm$^3$/g, bevorzugt etwa 150 - 550 mm$^3$/g, insbesondere bevorzugt etwa 200 - 500 mm$^3$/g. Ein unter Verwendung von kolloidaler Kieselsäure hergestellter Zeolith vom ZSM-12 Typ zeigt im Porenradienbereich von 10 - 100 nm typischerweise ein spezifisches Porenvolumen von etwa 40 mm$^3$/g. Die Bestimmung des Porenvolumens durch Quecksilberporosimetrie erfolgt gemäß DIN 66133 bei einem maximalen Druck von 4000 bar (vgl. Beispiel 11). Die vorstehenden Porosimetrie-Werte werden am gemäß Beispiel 1 gewaschenen, getrockneten und calcinierten Zeolithen bestimmt. Die vorstehenden Bereiche für das spezifische Volumen gelten auch für den gewaschenen, getrockneten, jedoch nicht calcinierten Zeolithen.

Der erfindungsgemäße Zeolith vom ZSM-12 Typ weist einen hohen Anteil an großen Poren auf, wie er nur bei der erfindungsgemäßen Zusammensetzung gemäß Anspruch 1 erhältlich ist. Der erfindungsgemäße Zeolith vom ZSM-12 Typ zeigt bei der Stickstoffporosimetrie im Bereich von 30 - 200 Å ein spezifisches Volumen von 0,05 - 0,40 cm$^3$/g, bevorzugt 0,10 - 0,35 cm$^3$/g, insbesondere bevorzugt 0,15 - 0,30 cm$^3$/g. Es wird angenommen, ohne dass die Erfindung auf diese Annahme beschränkt ist, dass die vorstehende Porosimetrie des erfindungsgemäßen Zeolithen für die hohe katalytische Aktivität mit verantwortlich ist und die zahlreichen Hohlräume zwischen den kleinen Primärkristalliten widerspiegelt. Die Bestimmung des spezifischen Porenvolumens durch Stickstoffporosimetrie erfolgt entsprechend DIN 661134 wie in Beispiel 12 angegeben. Die vorstehenden Porosimetrie-Werte können am getrockneten uncalcinierten Zeolithen oder vorzugsweise am calcinierten Zeolithen bestimmt werden. Die vorstehenden Porosimetrie-Werte werden am gemäß Beispiel 1 gewaschenen, getrockneten und calcinierten Zeolithen bestimmt. Die vorstehenden Bereiche für das spezifische Volumen gelten auch für den gewaschenen, getrockneten, jedoch nicht calcinierten Zeolithen.

Es wurde gefunden, dass es besonders vorteilhaft ist, wenn die Synthese des Zeoliths direkt mit dem gewünschten $SiO_2/Al_2O_3$-Verhältnis erfolgt, indem die Menge an Siliciumquelle und Aluminiumquelle in der Primärsynthese des Zeoliths (in der Synthesegelzusammensetzung) entsprechend eingestellt wird. Das $SiO_2/Al_2O_3$-Verhältnis in der Synthesegelzusammensetzung stimmt in etwa mit dem $SiO_2/Al_2O_3$-Ver-hältnis im ZSM-12 Zeolith überein. Der $SiO_2$-Anteil in der Synthesegelzusammensetzung weicht, wie dem Fachmann geläufig, im Allgemeinen um etwa $\pm$ 10 % vom Anteil im fertigen Zeolith ab. Nur bei sehr großen bzw. sehr geringen Anteilen von $SiO_2$ werden größere Abweichungen beobachtet. Dadurch ist keine anschließende Dealuminierung des Zeoliths zur Einstellung des $SiO_2/Al_2O_3$-Verhältnisses erforderlich. Der Aluminiumgehalt des Zeoliths vom ZSM-12 Typ muss somit nicht nachträglich durch Zugabe von Säure und Herauslösen von Aluminiumatomen erniedrigt werden. Es wird angenommen, dass durch die erfindungsgemäße direkte Synthese ein homogener Aufbau des Zeoliths ermöglicht und sogenanntes "extra-framework"-Aluminium vermieden wird, das beim nachträglichen Dealuminieren nach der Zeolith-Synthese entsteht und die Aktivität bzw. Selektivität des ZSM-12 Zeolithen nachteilig beeinflussen kann.

Es wurde überraschend gefunden, dass sich die erfindungsgemäßen vorteilhaften Eigenschaften des Zeolithen verwirklichen lassen, wenn das zur Herstellung des Zeoliths verwendete Synthesegel bestimmte Anforderungen erfüllt. So werden erfindungsgemäß TEA$^+$-Kationen als Templat verwendet (TEA = Tetraethylammonium). Demgegenüber ist MTEA$^+$ ungeeignet (MTEA = Methyltriethylammonium). Besonders bevorzugt wird TEAOH als Templat eingesetzt. An sich können jedoch beliebige Tetraethylammoniumionen liefernde Einsatzstoffe verwendet werden. Beispielsweise kann auch TEABr verwendet werden.

Das im Synthesegel eingestellte molare Verhältnis $TEA^+/SiO_2$ wird vorzugsweise gering gewählt. Bevorzugt wird das molare Verhältnis $TEA^+/SiO_2$ zwischen etwa 0,10 und 0,18 gewählt. In der Synthesegelzusammensetzung wird das molare Verhältnis $SiO_2/Al_2O_3$ bevorzugt im Bereich von etwa 50 bis etwa 150 eingestellt.

Das Synthesegel sollte vorzugsweise auch einen verhältnismäßig geringen Alkali- und/oder Erdalkaligehalt aufweisen, wobei das molare Verhältnis $M_{2/n}O:SiO_2$ vorteilhafterweise zwischen etwa 0,01 und 0,045 liegen kann. Dabei ist $M_{2/n}O$ das Oxid des Alkali- bzw. Erdalkalimetalls mit der Wertigkeit n. Des Weiteren wird erfindungsgemäß ein verhältnismäßig niedriges molares Verhältnis von $H_2O:SiO_2$ von etwa 5 bis 15, vorzugsweise von 5 bis 13 im Synthesegel verwendet. Als Metallion M wird vorzugsweise ein Alkalimetall gewählt, insbesondere bevorzugt Natrium.

Überraschend wurde ein erheblicher Einfluss der Silicium-Quelle auf die Morphologie und katalytische Aktivität des erhaltenen ZSM-12 Zeoliths festgestellt. So wird erfindungsgemäß eine Fällungskieselsäure verwendet, welche im Vergleich zu kolloidaler Kieselsäure eine niedrigere Reaktivität aufweist. Dadurch kann auch die mittlere Größe der erhaltenen Primärkristallite, die erfindungsgemäß bei weniger als 0,1 $\mu$m liegen soll, mit beeinflusst werden. Die Fällungskieselsäure weist vorzugsweise eine BET-Oberfläche von $\leq$ 200 m$^2$/g auf.

Es ist wichtig, dass die mittlere Größe der Primärkristallite im erfindungsgemäßen Katalysator verhältnismäßig gering ist und weniger als 0,1 $\mu$m beträgt. Die Primärkristallitgröße kann aus rasterelektronenmikroskopischen Aufnahmen ermittelt werden, indem eine Anzahl von Primärkristalliten im Hinblick auf Länge und Breite vermessen wird. Über die gemessenen Primärkristallitgrößen wird dann der arithmetische Mittelwert gebildet. Die im erfindungsgemäßen Katalysator enthaltenen Primärkristallite weisen in der Regel keine wesentlichen Unterschiede ihrer Ausdehnung in der Breite im Vergleich zur Ausdehnung in der Länge auf. Sollte dies im Einzelfall vorkommen, wird bei der Bestimmung der Primärkristallitgröße der größte und der kleinste Durchmesser des Kristallits gemittelt.

Im Einzelnen wird so vorgegangen, dass rasterelektronenmikroskopische Aufnahmen des gewaschenen und getrockneten (vgl. Beispiel 1), aber uncalcinierten, templathaltigen ZSM-12 Zeolithen bei einer Vergrößerung von 68.000 bis 97.676 angefertigt werden (Gerät: Leo 1530; LEO GmbH, Oberkochen, DE). Auf den Aufnahmen werden 30 Primärkristallite ausgewählt, welche klar abgegrenzt sind und deren Ausdehnung in der Länge bzw. der Breite ausgemessen (vgl. oben) und daraus der Mittelwert bestimmt. Aus den so bestimmten Durchmessern wird dann der arithmetische Mittelwert, d.h. die mittlere Primärkristallitgröße, gebildet. Die Primärkristallitgröße wird durch Calcinieren im Wesentlichen nicht beeinflusst. Die Primärkristallitgröße kann daher direkt nach der Synthese des Zeoliths vom ZSM-12 Typ sowie auch nach dem Calcinieren bestimmt werden.

Bevorzugt weisen die Primärkristallite eine Größe im Bereich von etwa 10 bis 80 nm, besonders bevorzugt im Bereich von etwa 20 bis 60 nm auf. Der erfindungsgemäße Katalysator umfasst also vergleichsweise kleine Primärkristallite.

Nach einer besonders bevorzugten erfindungsgemäßen Ausführungsform sind die Primärkristallite des Zeolithen zumindest teilweise zu Agglomeraten zusammengelagert. Vorteilhafterweise sind die Primärkristallite zu einem Anteil von mindestens 30%, vorzugsweise mindestens 60%, insbesondere mindestens 90%, zu Agglomeraten zusammengelagert. Die Prozentangaben beziehen sich dabei auf die Gesamtzahl der Primärkristallite.

Bei Einhaltung der vorstehend beschriebenen Bedingungen bzw. Merkmale bei der Synthese des erfindungsgemäßen Zeoliths vom ZSM-12 Typ wird überraschend eine offenbar besonders vorteilhafte Morphologie der Agglomerate aus den sehr kleinen Primärkristalliten erhalten, die auch die katalytische Aktivität des ZSM-12 Zeoliths positiv beeinflusst. Die Agglomerate weisen danach vorzugsweise an ihrer Oberfläche eine große Anzahl von Hohlräumen bzw. Zwischenräumen zwischen den einzelnen Primärkristalliten auf. Die Agglomerate bilden somit einen lockeren Verbund aus Primärkristalliten mit von der Agglomeratoberfläche zugänglichen Hohlräumen oder Zwischenräumen zwischen den Primärkristalliten. Auf rasterelektronenmikroskopischen Aufnahmen erscheinen die Agglomerate als schwammartige Struktur mit stark zerklüfteter Oberfläche, die durch den lockeren Zusammenhalt der Primärkristallite erzeugt wird. Die Aufnahmen zeigen vorzugsweise größere sphärische Agglomerate, die eine broccoliartige Form aufweisen. Die strukturierte Oberfläche ist aus Primärkristalliten gebildet, die einen lockeren Verbund ausbilden. Zwischen einzelnen Kristalliten sind Hohlräume ausgebildet, von welchen zur Oberfläche hin Kanäle führen, die auf den Aufnahmen als dunkel abgesetzte Stellen der Oberfläche erscheinen. Insgesamt wird eine poröse Struktur erhalten. Die aus den Primärkristalliten gebildeten Agglomerate sind vorzugsweise wiederum zu größeren, übergeordneten Agglomeraten verbunden, zwischen denen einzelne Kanäle mit größerem Durchmesser ausgebildet sind.

Im Gegensatz dazu zeigen herkömmliche Zeolithe des Typs ZSM-12 auf rasterelektronenmikroskopischen Aufnahmen eine im Vergleich weniger strukturierte und glatter erscheinende Oberfläche der Agglomerate. Dies wird wohl durch die wesentlich geringere Porosität des Zeoliths verursacht.

Der erfindungsgemäße Zeolith vom ZSM-12 Typ bildet also vorzugsweise eine offene Agglomeratstruktur aus, d.h. eine Struktur, bei welcher die Primärkristallite nicht in der Weise geordnet zusammen gelagert sind, dass eine weitgehend glatte bzw. geschlossene Oberfläche der Agglomerate erhalten wird. Die Primärkristallite bilden vielmehr Brücken zwischen benachbarten Primärkristalliten aus, so dass Hohlräume zwischen benachbarten Primärkristalliten entstehen.

Es wird angenommen, ohne dass die Erfindung durch diese Theorie beschränkt werden soll, dass durch die besondere Agglomeratstruktur ein effizienter Zutritt der umzusetzenden Moleküle zu den aktiven Zentren des erfindungsgemäßen Katalysators bzw. ein rascher Abtransport der umgesetzten Moleküle von den aktiven Zentren weg sowie eine besonders vorteilhafte Ausnutzung der katalytischen Aktivität auch im Inneren der Primärkristallit-Agglomerate ermöglicht wird. Beispielsweise kann die hohe katalytische Aktivität der erfindungsgemäßen Katalysatoren bei der Hydroisomerisierung von Paraffinen durch die effiziente Diffusion der Paraffine zu den aktiven Zentren in den Primärkristallit-Agglomeraten beeinflusst werden, wodurch die Reaktionskinetik und damit auch die Ausbeute an verzweigten Kohlenwasserstoffen verbessert werden kann. Dies ermöglicht, dass die Hydroisomerisierung bereits bei verhältnismäßig niedrigen Temperaturen mit guten Konversionsraten und weitgehend ohne Nebenreaktionen, die zum Abbau des Kohlenstoffgerüstes unter Entstehung niedermolekularer Kohlenwasserstoffe führen, ablaufen kann.

Die Primärkristallite des erfindungsgemäßen Zeoliths vom ZSM-12 Typ sind somit vorzugsweise zu Agglomeraten zusammen gelagert, wobei die Größe dieser Agglomerate stark variieren kann, und wobei mehrere Agglomerate auch zu größeren, übergeordneten Agglomeraten zusammengelagert sein können. Die Primärkristallite sind dabei überwiegend als abgegrenzte Einheiten rasterelektronenmikroskopisch erkennbar, sind aber andererseits über einen Teil ihrer Oberfläche mit benachbarten Primärkristalliten zu Agglomeraten verbunden. Auf rasterelektronischen Aufnahmen erkennt man größere, broccoliartige Gebilde mit stark strukturierter Oberfläche, welche sich zu größeren, übergeordneten Agglomeraten zusammengelagert haben. Diese Struktur wird durch die Verarbeitung des Zeoliths zum fertigen Katalysator, insbesondere durch das Calcinieren, Zerkleinern etc. nicht wesentlich beeinträchtigt oder verändert.

Nach einer bevorzugten Ausführungsform wird beim erfindungsgemäßen Zeolith vom ZSM-12 Typ die Anzahl der nicht in Agglomeraten gebundenen Primärkristallite gering gehalten. Unter Agglomeraten werden dabei Zusammenschlüsse von mehreren Primärkristalliten verstanden.

Der erfindungsgemäße Zeolith vom ZSM-12 Typ zeigt eine hohe katalytische Aktivität, insbesondere bei der Hydroisomerisierung von höheren Paraffinen. Gegenstand der Erfindung ist daher auch ein Katalysator, insbesondere für die Hydroisomerisierung von höheren Paraffinen, umfassend einen Zeolith des ZSM-12 Typs wie er oben beschrieben wurde. Unter höheren Paraffinen werden erfindungsgemäß solche mit mindestens 5 Kohlenstoffatomen verstanden.

In seiner einfachsten Ausführungsform umfasst der Katalysator nur den erfindungsgemäßen Zeolith vom ZSM-12 Typ. Dazu kann das bei der Herstellung des Zeoliths vom ZSM-12 Typ erhaltene Pulver, das zunächst auch weiter gemahlen und auf eine bestimmte Korngrößenverteilung eingestellt werden kann, beispielsweise bindemittelfrei zu Formkörpern gepresst werden.

Daneben kann der Katalysator jedoch auch weitere Komponenten umfassen. So kann der Katalysator noch weitere meso- und/oder mikroporöse Materialien umfassen. Unter meso- und mikroporösen Materialien werden z.B. Molekülsiebe bzw. Molekularsiebe verstanden, insbesondere Aluminophosphate, Metalloaluminate, TitanoSilicate und MetalloSilicate, wie z.B. Zeolithe. Der Anteil der meso- und/oder mikroporösen Materialien kann bezogen auf das Gewicht des Katalysators zwischen 1 und 99 Gew.-% betragen.

Nach einer weiteren erfindungsgemäßen Ausführungsform kann der Katalysator mit Hilfe eines Bindemittels zu Formkörpern verarbeitet werden. Insbesondere kann der Katalysator einen Bindemittelgehalt von etwa 10 bis 90 Gew.-%, bevorzugt 20 bis 70 Gew.-%, aufweisen. Als Bindemittel kann jedes dem Fachmann geläufige und geeignet erscheinende Bindemittel verwendet werden, insbesondere Silicatmaterialien, Aluminiumoxid, Zirkoniumverbindungen, Titanoxid, sowie deren Mischungen, und Materialien, wie z.B. Zement, Ton, Silica/Alumina. Bevorzugte Bindemittel sind unter anderem Pseudoboehmit sowie silicatische Bindemittel wie kolloidales Siliciumoxid.

Der erfindungsgemäße Katalysator eignet sich allgemein, jedoch nicht ausschließlich, für Umsetzungsreaktionen von Kohlenwasserstoffen. Die Eigenschaften des Katalysators können modifiziert werden, indem der Katalysator mit katalytisch aktiven Komponenten belegt wird, welche dessen katalytische Eigenschaften beeinflussen oder die selbst katalytisch aktiv sind. Geeignet sind hierfür beispielsweise Metalle der Nebengruppen, wobei hier die Edelmetalle besonders bevorzugt sind. Geeignet sind beispielsweise Gold, Silber, Rhenium, Ruthenium, Rhodium, Palladium, Osmium, Iridium und Platin sowie deren Mischungen und Legierungen. Platin ist besonders bevorzugt.

Die katalytisch aktive Komponente ist im Allgemeinen in einem Anteil von 0,01 bis 40 Gew.-%, bezogen auf das Gesamtgesicht des Katalysators, im Katalysator enthalten. Wird ein Edelmetall als katalytisch aktive Komponente verwendet, ist dieses bevorzugt in einem Anteil von 0,05 bis 2 Gew.-% im Katalysator enthalten.

Die besonderen Eigenschaften des erfindungsgemäßen Katalysators werden wesentlich durch die Herstellung des Katalysators beeinflusst, wie die Zusammensetzung des Synthesegels, sowie die Verwendung von gefällter Kieselsäure. Gegenstand der Erfindung ist daher auch ein Verfahren zur Herstellung des oben beschriebenen Katalysators.

Beim erfindungsgemäßen Verfahren wird eine Synthesegelzusammensetzung hergestellt, welche in wässriger Lösung bzw. Suspension enthält:

a1) eine Aluminiumquelle;
a2) Fällungskieselsäure als Siliciumquelle;
a3) $TEA^+$ als Templat;
a4) eine Alkali- und/oder Erdalkalimetallionenquelle M mit der Wertigkeit n; und

a5) das molare Verhältnis $H_2O : SiO_2$ im Bereich von 5 bis 15 eingestellt ist;

die Synthesegelzusammensetzung wird unter hydrothermalen Bedingungen und unter Rühren kristallisiert, so dass ein Feststoff erhalten wird. Der Feststoff wird abgetrennt und gegebenenfalls gewaschen, getrocknet und calciniert.

Der beim erfindungsgemäßen Verfahren erhaltene Feststoff entspricht dem oben beschriebenen Zeolith vom ZSM-12 Typ. Er weist Primärkristallite mit einer mittleren Primärkristallitgröße von < 0,1 nm auf und zeigt in Abhängigkeit vom Porenvolumen die oben beschriebene, mit Quecksilberporosimetrie bestimmte Verteilung des spezifischen Porenvolumens.

Wie bereits im Zusammenhang mit dem erfindungsgemäßen Zeolith vom ZSM-12 Typ bzw. dem Katalysator erläutert, werden beim erfindungsgemäßen Verfahren Fällungskieselsäure als Siliciumquelle sowie Tetraethylammoniumionen als Templat verwendet.

In Bezug auf die Aluminiumquelle bestehen an sich keine besonderen Einschränkungen, sodass erfindungsgemäß alle üblichen und dem Fachmann geläufigen Aluminiumquellen verwendet werden können. Geeignet ist beispielsweise aktiviertes Aluminiumoxid, γ-Aluminiumoxid, Aluminiumhydroxid, Natriumaluminat, Aluminiumnitrat, oder auch Aluminiumsulfat. Natriumaluminat ist besonders bevorzugt, da es gleichzeitig als Quelle für Alkaliionen wirkt.

Als Alkali- und/oder Erdalkalimetallionenquelle können alle üblichen und dem Fachmann geläufigen Verbindungen eingesetzt werden. Besonders bevorzugt wird als Alkalimetall Natrium eingesetzt. Als Alkalimetallquellen werden insbesondere Alkalihydroxide, vorzugsweise Natriumhydroxid, verwendet.

Bei der Synthese wird bevorzugt in der Weise vorgegangen, dass zunächst eine Lösung von Tetraethylammoniumhydroxid in demineralisiertem Wasser bereitgestellt wird. Zu dieser Lösung wird anschließend die Aluminiumquelle, beispielsweise Natriumaluminat, sowie eine Quelle für Alkali- und/oder Erdalkalimetallionen M mit der Wertigkeit n, beispielsweise Natriumhydroxid, zugegeben und die Mischung solange gerührt, bis eine Lösung der Bestandteile erhalten wird. Zu dieser Lösung wird anschließend die Fällungskieselsäure portionsweise zugegeben, wobei ein hochviskoses Gel erhalten wird. Die Synthese des Zeoliths wird bevorzugt in einer geringen Wassermenge als Lösungsmittel durchgeführt. Dazu wird das molare Verhältnis $H_2O : SiO_2$ im Bereich von 5 bis 15 eingestellt.

Das molare Verhältnis der Silicium- und Aluminium-Quellen in der Synthesegelzusammensetzung entspricht im Wesentlichen der molaren Zusammensetzung des herzustellenden Zeoliths des ZSM-12 Typs. Um durch die Reaktionskinetik bedingte Abweichungen zwischen der Zusammensetzung des Synthesegels und der erwünschten Zusammensetzung des Zeoliths berücksichtigen zu können, können ggf. Vorversuche zur Ermittlung der geeigneten Synthesegelzusammensetzung durchgeführt werden. Bevorzugt wird in der Synthesegelzusammensetzung in oxidischer Dar-stellungsweise das molare Verhältnis $M_{2/n}O : SiO_2$ in einem Bereich von 0,01 bis 0,045 eingestellt. Das molare Verhältnis $SiO_2 : Al_2O_3$ wird in der Synthesegelzusammensetzung bevorzugt im Bereich von 50 bis 150 eingestellt.

Die Synthesegelzusammensetzung wird solange gerührt, bis ein homogenes Gel erhalten wird. Die Kristalli-sation wird anschließend unter hydrothermalen Bedingungen durchgeführt, d.h. bei einer Temperatur von mehr als 100°C und einem Druck von mehr als 1 bar. Dazu wird das Synthesegel in einem geeigneten Druckbehälter gerührt. Die Kristallisation wird bevorzugt bei Temperaturen von etwa 120 bis 200°C, insbesondere bevorzugt etwa 140 bis 180°C, durchgeführt. Besonders geeignet wird die Kristallisation bei einer Temperatur von etwa 160°C durchgeführt. Die Kristallisationszeit beträgt vorzugsweise etwa 50 bis 500 h, insbesondere etwa 100 bis 250 h. Die Kristallisationszeit wird beispielsweise durch die Kristallisationstemperatur beeinflusst. Unter diesen Synthesebedingungen wird ein Feststoff erhalten, welcher Primärkristallite mit einer mittleren Primärkristallitgröße von nicht mehr als etwa 0,1 µm aufweist.

Das kristallisierte Produkt wird anschließend von der Mutterlauge abgetrennt. Dazu kann der Reaktionsansatz beispielsweise mit Hilfe einer Membranfilterpresse filtriert werden. Andere Verfahren zur Abtrennung des Feststoffs können jedoch ebenfalls durchgeführt werden. Eine Abtrennung kann beispielsweise auch durch Zentrifugation erfolgen. Der abgetrennte Feststoff wird anschließend mit demineralisiertem Wasser gewaschen. Bevorzugt wird der Waschvorgang solange durchgeführt, bis die elektrische Leitfähigkeit des Waschwassers unter 100 µS/cm abgesunken ist.

Der abgetrennte Feststoff wird anschließend getrocknet. Die Trocknung wird beispielweise an Luft in üblichen Trockenvorrichtungen durchgeführt. Die Trockentemperatur wird beispielsweise im Bereich von 100°C bis 120°C gewählt. Die Trockenzeit liegt im Allgemeinen im Bereich von etwa 10 bis 20 h. Die Trockenzeit ist dabei abhängig von der Feuchtigkeit des abgetrennten Feststoffs sowie der Größe der Charge. Der getrocknete Feststoff kann anschließend in üblicher Weise zerkleinert, insbesondere granuliert oder gemahlen werden.

Zur Entfernung des Templats kann der Feststoff calciniert werden. Die Calcinierung wird unter Luftzutritt durchgeführt, wobei Temperaturen im Bereich von 400 bis 700°C, vorzugsweise 500 bis 600°C, gewählt werden. Die Dauer für die Calcinierung wird im Allgemeinen zwischen 3 und 12 h, vorzugsweise 3 und 6 h, gewählt. Die Zeiten für die Calcinierung beziehen sich dabei auf die Dauer, für welche der Zeolith bei der maximalen Temperatur gehalten wird. Aufheiz- und Abkühlzeiten sind nicht berücksichtigt.

Der Gehalt des Katalysators an austauschbaren Kationen, insbesondere Alkaliionen kann beispielsweise durch Behandlung mit geeigneten Kationenquellen, wie Ammoniumionen, Metallionen, Oxoniumionen bzw. deren Mischungen beeinflusst werden, wobei die im erfindungsgemäßen Zeolith vom ZSM-12 Typ enthaltenen austauschbaren Ionen, insbesondere Alkaliionen, ausgetauscht werden. Der mit den entsprechenden Ionen beladene Katalysator kann anschließend erneut gewaschen und getrocknet werden. Die Trocknung wird beispielsweise bei Temperaturen von 110 bis 130°C für eine Dauer von 12 bis 16 h durchgeführt. Um bei einem Austausch gegen Ammoniumionen den Katalysator in eine saure aktivierte Form zu überführen, kann der Katalysator noch calciniert werden, wobei beispielsweise Temperaturen im Bereich von 460 bis 500°C für eine Dauer von 6 bis 10 h angewendet werden können. Abschließend kann der Katalysator noch vermahlen werden.

Der Katalysator kann in Pulverform verwendet werden. Vorzugsweise wird der Katalysator zur Erhöhung der mechanischen Stabilität und zur besseren Handhabung jedoch zu Formkörpern verarbeitet. Dazu kann der erfindungsgemäße Zeolith vom ZSM-12 Typ, wie vorstehend ausgeführt, beispielsweise mit oder ohne Zusatz von Bindemitteln zu entsprechenden Formkörpern gepresst werden. Die Formgebung kann jedoch auch nach anderen Verfahren erfolgen, beispielsweise durch Extrudieren. Dabei wird das erhaltene Pulver nach Zusatz eines Bindemittels, beispielsweise Pseudoboehmit, zu Formkörpern geformt. Die Formkörper können anschließend getrocknet werden, beispielsweise bei Temperaturen von 100 bis 130°C. Gegebenenfalls können die Formkörper noch calciniert werden, wobei im Allgemeinen Temperaturen im Bereich von 400 bis 600°C verwendet werden.

Insbesondere beim Einsatz für Hydrierungen, Dehydrierungen und Hydroisomerisierungen wird der Katalysator noch mit geeigneten aktivierenden Verbindungen (aktiven Komponenten) belegt. Die Zugabe der aktiven Komponenten kann dabei auf jede dem Fachmann geläufige Art erfolgen, z.B. durch intensives Vermischen, Bedampfen, Tränken bzw. Imprägnieren mit einer Lösung oder Einlagerung in den Zeolith. Bevorzugt erfolgt eine Belegung des Katalysators mit zumindest einem Nebengruppenmetall, insbesondere bevorzugt mit mindestens einem Edelmetall. Dazu wird der Katalysator beispielsweise mit einer entsprechenden Lösung eines Nebengruppenmetalls bzw. eines Edelmetalls getränkt. Für die Beladung mit Platin eignet sich beispielsweise eine wässrige $H_2PtCl_6$-Lösung. Die Tränklösung wird dabei vorzugsweise so eingestellt, dass die Tränklösung vollständig vom Katalysator aufgenommen wird. Die-Katalysatoren werden anschließend beispielsweise bei Temperaturen von etwa 110 bis 130°C für 12 bis 20 h getrocknet und beispielsweise bei 400 bis 500°C für 3 bis 7 h calciniert.

Der erfindungsgemäße Katalysator eignet sich insbesondere für eine Modifikation von Kohlenwasserstoffen. So eignet sich der erfindungsgemäße Katalysator zum Reformieren von Schnitten der Erdöldestillation, zum Erhöhen der Fließfähigkeit von Gasölen, zur Isomerisierung von Olefinen oder aromatischen Verbindungen, zum katalytischen oder hydrierenden Cracken wie auch zur Oligomerisation oder Polymerisation von olefinischen oder acetylenischen Kohlenwasserstoffen. Weitere Anwendungen sind Alkylierungsreaktionen, Transalkylierung, Isomerisierung oder Disproportionierung von Aromaten und alkylsubstituierten Aromaten, Dehydrierung und Hydrierung, Hydratisierung und Dehydratisierung, Alkylierung und Isomerisierung von Olefinen, Desulfurierung, Umsatz von Alkoholen und Ethern zu Kohlenwasserstoffen und Umsatz von Paraffinen oder Olefinen zu Aromaten. Insbesondere eignet sich der Katalysator auch zur Isomerisierung und Hydroisomerisierung von Naphthenen. Gegenstand der Erfindung ist daher auch die Verwendung des oben beschriebenen Katalysators für die Umsetzung organischer Verbindungen, insbesondere Kohlenwasserstoffen.

Besonders bevorzugt ist dabei die Hydroisomerisierung höherer Paraffine. Unter höheren Paraffinen werden dabei gesättigte lineare Kohlenwasserstoffe mit einer Kohlenstoffanzahl von mehr als 5 Kohlenstoffatomen, insbesondere von mindestens 7 Kohlenstoffatomen verstanden. Insbesondere eignet sich der Katalysator für die Hydroisomerisierung von n-Octan.

Die Hydroisomerisierung wird vorzugsweise in Gegenwart von Aromaten, insbesondere von Benzol durchgeführt.

Die Hydroisomerisierung wird in Gegenwart von Wasserstoff vorzugsweise bei Temperaturen unterhalb von 290°C, vorzugsweise bei etwa 230 bis 260°C, insbesondere bei etwa 250°C, durchgeführt. Der Druck wird bei der Hydroisomerisierung vorzugsweise in einem Bereich von 1 bis 50 bar bei einer Flüssig-Raumgeschwindigkeit (LHSV) von etwa 0,1 bis 101 pro Stunde des zugeführten Kohlenwasserstoffes bzw. des kohlenwasserstoffhaltigen Gemisches je Liter Katalysator durchgeführt.

Die Erfindung wird anhand der folgenden Beispiele näher erläutert.

Beispiel 1: Synthese von ZSM-12 (erfindungsgemäß)

Für die Herstellung des ZSM-12 Zeoliths wurde eine Synthesegelzusammensetzung hergestellt, welche die folgende Zusammensetzung aufwies:

$$8,5952\ H_2O : SiO_2 : 0,0099\ Al_2O_3 : 0,0201\ Na_2O : 0,1500\ TEAOH$$

TEAOH = Tetraethylammoniumhydroxid
271,2 g Natriumaluminat und 99,1 g NaOH wurden unter Rühren in 9498,3 g einer wässrigen Lösung von Tetraethylammoniumhydroxid (35 Gew.-%) und 15905,3 g Wasser gelöst. Die Lösung wurde in einem 40 l fassenden Druckbehälter

vorgelegt, welcher mit einem Rührer versehen war. Unter starkem Rühren wurden 10226,1 g Fällungskieselsäure mit einer spezifischen Oberfläche von 170 m$^2$/g in kleinen Portionen zugegeben. Es wurde ein hochviskoses Gel erhalten, das bei 24,0°C einen pH-Wert von 13,7 aufwies. Der Druckbehälter wurde geschlossen und der Inhalt während 12 h auf 163°C erhitzt und dann für eine Gesamtreaktionszeit von 155 h bei dieser Temperatur gehalten. Im Druckbehälter stellte sich dabei ein Druck von 13 bar ein.

Nach Ablauf von 155 h wurde der Druckbehälter auf Raumtemperatur abgekühlt. Das feste Produkt wurde durch Filtration von der Mutterlauge abgetrennt und anschließend solange mit demineralisiertem Wasser gewaschen, bis die Leitfähigkeit des Waschwassers unterhalb von 100 $\mu$S/cm lag. Der Filterkuchen wurde bei 120°C unter Luftzutritt während 16 h getrocknet und anschließend unter Luftzutritt calciniert. Zum Calcinieren wurde der getrocknete Feststoff zunächst bei einer Aufheizrate von 1 K/min auf 120°C erhitzt und 3 h bei dieser Temperatur gehalten. Anschließend wurde mit einer Steigerungsrate von 1 K/min auf 550°C erhitzt und diese Temperatur für 5 h gehalten.

Die Untersuchung mit Röntgenbeugung ergab, das sich ZSM-12 gebildet hatte. Die rasterelektronenmikroskopische Untersuchung zeigte Agglomerate mit einem Durchmesser von ungefähr 0,8 $\mu$m, welche aus kleinen Primärkristalliten gebildet sind, wobei die Agglomerate eine broccoliartige Struktur zeigen.

Beispiel 2: Ionenaustausch

920 g des in Beispiel 1 erhaltenen ZSM-12 Zeoliths wurden in einer Lösung von 349,60 g NH$_4$NO$_3$ in 4250,40 g entmineralisiertem Wasser suspendiert und für 2 h gerührt. Der Feststoff wurde durch Filtration abgetrennt und der Filterkuchen vier mal mit je 500 ml entmineralisiertem Wasser gewaschen. Anschließend wurde der gewaschene Filterkuchen erneut in einer frischen Lösung von 349,60 g NH$_4$NO$_3$ in 4250,40 g entmineralisiertem Wasser aufgeschlämmt und für 2 h gerührt. Der Feststoff wurde erneut durch Filtration abgetrennt und solange mit demineralisiertem Wasser gewaschen, bis die Leitfähigkeit des Waschwassers unter 100 $\mu$S/cm abgesunken war. Der Filterkuchen wurde anschließend bei 120°C während 14 h an Luft getrocknet und dann an Luft calciniert. Dazu wurde der gewaschene und getrocknete Filterkuchen bei einer Heizrate von 1°C/min auf 480°C erhitzt und dann für 8 h bei dieser Temperatur gehalten.

Ausbeute: 916,7 g.

Die chemische und physikalische Analyse ergab die in Tabelle 1 angegebenen Werte:

| Tabelle 1: Analyse des erfindungsgemäßen Zeoliths vom ZSM-12 Typ | |
| --- | --- |
| Glühverlust (1000°C) | 7,9 Gew.-% |
| Na[a) | 27 ppm (Gew.) |
| Al[a) | 0,99 Gew.-% |
| Si[a) | 47,1 Gew.-% |
| $n(SiO_2)$ / $n(Al_2O_3)$ | 91 |
| C[a) | 163 ppm (Gew.) |
| Fe[a) | 239 ppm (Gew.) |
| spez. Oberfläche [b) | 415 m$^2$/g |
| [a) : bezogen auf den bei 1000°C geglühten ZSM-12 | |
| [b) : BET-Fläche nach DIN 66131 | |

Beispiel 3: Herstellung von Formstücken durch Extrudieren

330 g des in Beispiel 2 in der sauren Form erhaltenen ZSM-12 Zeoliths wurden während 15 min in einem Knetwerk mit 156,3 g handelsüblichem Pseudoboehmit als Bindemittel unter Zugabe von 294 g demineralisiertem Wasser vermischt und zu einer plastischen Masse verarbeitet. Die Masse wurde für weitere 10 min geknetet und dann 21,0 g Formtrennöl (Steatitöl) zugegeben. Die Masse wurde anschließend zu Formkörpern extrudiert (d = 1/16"). Die Formkörper wurden an Luft bei 120°C während 16 h getrocknet und anschließend an Luft calciniert. Dazu wurden die Formkörper zunächst bei einer Heizrate von 1°C/min auf 120°C erwärmt und für 2 h bei dieser Temperatur gehalten. Anschließend wurde die Temperatur mit einer Heizrate von 1°C/min auf 550°C erhöht und die Formkörper für 5 h bei dieser Temperatur gehalten. Die Formkörper wurden auf Raumtemperatur abgekühlt und dann auf eine mittlere Größe von 3 mm zerkleinert. Der Katalysator wies die in Tabelle 2 angegebenen chemischen und physikalischen Eigenschaften auf:

Tabelle 2: Eigenschaften eines extrudierten erfindungsgemäßen Zeoliths vom ZSM-12 Typ (Bindemittel: Pseudoboehmit)

| Bindemittel | $Al_2O_3$ |
|---|---|
| Anteil Bindemittel | 25 Gew.-% |
| Glühverlust | 8,8 Gew.-% |
| Na[a] | 17,4 ppm (Gew.) |
| C[a] | 381 ppm (Gew.) |
| spez. Oberfläche[b] | 363 $m^2$/g |

[a] : Nach Glühen bei 1000°C

[b] : BET-Oberfläche nach DIN 66131

### Beispiel 4:

### Herstellung von Formkörpern mit einem Silicat-Bindemittel

300 g des in Beispiel 2 erhaltenen ZSM-12 Zeoliths in der $H^+$-Form wurden in einem Knetwerk mit 473,7 g kolloidaler Kieselsäure mit einem Gewichtsanteil von 25 % Silica vermischt und solange mit kalter Luft getrocknet, bis sich eine plastische Masse bildete. Die plastische Masse wurde für weitere 10 min geknetet und dann 6,0 g Methylcellulose zugegeben. Anschließend wurde die Masse extrudiert (d = 1/16"). Die Extrudate wurden während 16 h bei 60°C an Luft getrocknet und dann unter Luftzutritt calciniert. Dazu wurden die getrockneten Extrudate zunächst mit einer Heizrate von 1 K/min auf 600°C erhitzt und für 5 h bei dieser Temperatur gehalten. Die Extrudate wurden anschließend zu einem Granulat mit einer mittleren Länge von 3 mm zerkleinert.

### b) Ionenaustausch

349,5 g des unter a) erhaltenen granulierten Extrudats wurden in ein Sieb gegeben und das Sieb in eine Lösung aus 158,32 g $NH_4NO_3$ in 2103,44 g demineralisiertem Wasser getaucht. Das Granulat wurde während 1,5 h bei Raumtemperatur in der Lösung belassen, wobei das Sieb regelmäßig kurzfristig aus der Lösung entnommen wurde, um den Ionenaustausch zu verbessern. Das Granulat wurde aus der $NH_4NO_3$-Lösung entnommen und solange mit demineralisiertem Wasser gewaschen, bis die Leitfähigkeit des Waschwassers auf unter 50 μS/cm abgesunken war. Das mit Ammoniumionen beladene Granulat wurde an Luft während 16 h bei 120°C getrocknet und anschließend calciniert. Für die Calcinierung wurde das getrocknete Granulat zunächst bei einer Heizrate von 1 K/min auf 600°C erhitzt und für 5 h bei dieser Temperatur gehalten.

Die Eigenschaften des Katalysators sind in Tabelle 3 zusammen gefasst:

Tabelle 3: Eigenschaften eines extrudierten erfindungsgemäßen Katalysators vom ZSM-12 Typ (Bindemittel kolloidale Kieselsäure)

| Bindemittel | Siliciumdioxid |
|---|---|
| Bindemittelanteil | 30 Gew.-% |
| Glühverlust[a] | 5,1 Gew.-% |
| Na[b] | 44 ± 10 ppm (Gew.) |
| C[b] | 100 ± 20 ppm (Gew.) |
| Porenvolumen (Hg) [c] | 0,38 $cm^3$/g |
| spez. Oberfläche[d] | 345 $m^2$/g |

[a] : 1000°C/3 h

[b] : ungeglüht

[c] : Hg-Methode nach DIN 66133

[d] : BET-Oberfläche nach DIN 66131; Mehrpunktverfahren (p/po = 0,004 - 0,14)/Konditionierung: 350°C/3h; im Vakuum

### Beispiel 5 (Vergleichsbeispiel):

Beispiel 1 wurde wiederholt, wobei jedoch kolloidale Kieselsäure anstelle gefällter Kieselsäure verwendet wurde. Die Synthesegelzusammensetzung wurde wie folgt gewählt:

$$8,5952 \ H_2O : SiO_2 : 0,0099 \ Al_2O_3 : 0,0201 \ Na_2O : 0,1500 \ TEAOH$$

Es wurde ein Feststoff erhalten, welcher neben ZSM-12 Zeolith ZSM-5 Zeolith in einem Anteil von 30% enthielt. Der Feststoff wurde rasterelektronenmikroskopisch untersucht. Aus der REM-Aufnahme wurde der mittlere Durchmesser der ZSM-12 Primärkristallite zu 50 - 70 nm bestimmt. Die Primärkristallite bildeten durch Zusammenlagerung dicht gepackte, geschlossene Agglomerate aus. Der Anteil der geschlossenen Agglomerate an der Gesamtzahl der Agglomerate lag bei mehr als 20%.

Beispiel 6 (Vergleichsbeispiel):

Es wurde ein ZSM-12 Zeolith hergestellt, wie er von S. Ernst, P.A. Jacobs, J.A. Martens, J. Weitkamp; Zeolites, 19887, Vol. 7, 458-62, beschrieben wird. Der Zeolith wurde unter Verwendung von Methyltriethylammoniumbromid (MTEABr) hergestellt. Das Zeolithpulver wies ein Verhältnis $SiO_2/Al_2O_3$ von 108 auf. Aufnahmen mit dem Rasterelektronenmikroskop zeigten bei einer 1980 bis 20000-fachen Vergrößerung reiskornförmige Kristalle mit einer durchschnittlichen Länge von 0,5 bis 13 μm.

Das Zeolithpulver wurde, wie bei Beispiel 2 beschrieben, durch Ionenaustausch mit $NH_4NO_3$ und anschließender Calcinierung in die saure $H^+$-Form überführt.

Beispiel 7: Herstellung von mit Platin beladenen Katalysatoren

Die in den Beispielen 2 und 6 erhaltenen Zeolithe in der H-Form wurden jeweils ohne weitere Zusätze mit Hilfe einer Carver Laborpresse bei einem Druck von 18 Tonnen zu Tabletten gepresst. Diese Tabletten wurden gebrochen und die Granulate der Siebfraktion 0,5 - 1,0 mm abgetrennt. Diese Granulate wurden durch Tränken mit 30%-iger $H_2PtCl_6$-Lösung mit 0,5 Gew.-% Platin belegt. Das Granulat wurde anschließend bei 120°C für 16 h getrocknet und dann bei 450°C für 5 h calciniert. Die Eigenschaften der Granulate sind in Tabelle 4 zusammengefasst.

Tabelle 4: Eigenschaften eines mit Platin beladenen erfindungsgemäßen Katalysators vom ZSM-12 Typ

| Zeolith | Beispiel 2 | Beispiel 6 |
|---|---|---|
| Form | Granulat, 0,5-1,0 mm | Granulat, 0,5-1,0 mm |
| Porenvolumen-Hg[c]; cm$^3$/g | 0,50 | 0,49 |
| Porengrößenverteilung | | |
| > 1750 nm (Vol.-%) | 2,21 | 5,26 |
| 1750 - 80 nm (Vol.-%) | 51,82 | 87,56 |
| 80 - 14 nm (Vol.-%) | 29,00 | 5,51 |
| 14 - 7,5 nm (vol.-%) | 16,97 | 1,67 |
| spez. Oberfläche[a] (m$^2$/g) | 401 | 281 |

[a]: BET-Oberfläche nach DIN 66131; Mehrpunktverfahren (p/po = 0,004 - 0,14)/Konditionierung: 350°C/3h; im Vakuum
[c]: Hg-Methode nach DIN 66133

Beispiel 8: Isomerisierung

Die gemäß Beispiel 7 erhaltenen platinhaltigen Katalysatoren wurden in einem Mikroreaktor mit reinem n-Heptan getestet. Die Testbedingungen waren wie folgt:

| | |
|---|---|
| Reaktordurchmesser: | 8 mm |
| Katalysatorgewicht: | 2,0 g |
| Katalysatorgröße: | Siebfraktion des granulierten Materials von 0,5 bis 1,0 mm |
| Druck: | 20 bar |
| Temperatur: | 250 °C |
| WHSV: | 2,18 h$^{-1}$ |
| $H_2$ :n-Heptan (molar): | 1,3 : 1 |

Der Reaktor wurde wie folgt eingefahren: Zuerst wurde Luft mit einer Geschwindigkeit von 33,33 ml/min bei Atmosphärendruck eingeleitet, worauf der Reaktor von Raumtemperatur auf 400°C aufgeheizt wurde. Diese Temperatur wurde 1 Std. gehalten und anschließend die Temperatur von 400°C auf 250°C abgesenkt. Dann wurde der Luftstrom unterbrochen und für 30 min durch einen Stickstoffstrom (33,33 ml/min) ersetzt. Der Stickstoffstrom wurde schließlich für 30 min durch einen Wasserstoffstrom (33,33 ml/min) ersetzt. Dann wurde der Druck auf 20 bar $H_2$ erhöht, worauf reines n-Heptan eingeleitet und der Produktstrom gaschromatographisch analysiert wurde. Die Peakflächen aller C1- bis C7-Komponenten wurden alle 30 min gemessen. Die Peakflächen aller i(so)-Heptane (z.B. Methylhexane, Dimethylpentane, usw.) wurden zusammengefasst und als i(so)-Heptanflächen bezeichnet. Die Parameter sind wie folgt definiert:

```
Konversion (%)     = (1 - Fläche (n-Heptan)/Gesamtfläche) x 100


Selektivität (%) = (Fläche(i-Heptan)/Gesamtfläche - Fläche(n-
                     Heptan)) x 100


Ausbeute (%)       = (Fläche (i-Heptan)/Gesamtfläche) x 100
```

Der erfindungsgemäße Katalysator zeigte eine stationäre Konversion und Ausbeute von 40% bei nahezu 100%-iger Selektivität. Ein Cracken des n-Heptans zu kleineren Molekülen fand nur in geringen Anteilen statt. Der Vergleichskatalysator zeigt bei 250°C keinen wesentlichen Umsatz von n-Heptan. Der erfindungsgemäße Katalysator zeigt eine höhere Aktivität und setzt bereits bei niedrigeren Temperaturen n-Heptan mit sehr hoher Selektivität um.

Beispiel 9:

Beispiel 1 wurde wiederholt, wobei die Zusammensetzung des Synthesegels auf das folgende Verhältnis eingestellt wurde:
7,8918 $H_2O$ : $SiO_2$ : 0,0091 $Al_2O_3$ : 0,0185 $Na_2O$ : 0,1377 TEAOH
Die Kristallisationsdauer wurde auf 175 Stunden erhöht. Im Übrigen entsprach die Versuchsdurchführung dem in Beispiel 1 beschriebenen Ablauf. Es wurde ein kristalliner Feststoff erhalten, welcher aus ZSM-12 aufgebaut war. Der Feststoff wurde rasterelektronenmikroskopisch untersucht. Auf der REM-Aufnahme erkennt man Agglomerate, welche eine broccoliartige Struktur aufweisen (offene Agglomerate). Der Anteil der geschlossenen Agglomerate an der Gesamtzahl der Agglomerate beträgt weniger als 10%, während die offenen Agglomerate einem Anteil von mehr als 90% entsprechen.

Beispiel 10:

Die gemäß Beispiel 7 erhaltenen Pt-haltigen Katalysatoren wurden in einem Mikroreaktor mit reinem n-Octan getestet. Die Testbedingungen waren wie folgt:

| | |
|---|---|
| Reaktordurchmesser: | 8 mm |
| Katalysatorgewicht: | 2,0 g |
| Katalysatorgröße : | Siebfraktion des granulierten |
| | Materials von 0,5 bis 1,0 mm |
| Druck: | 20 bar |
| Temperatur: | 245 - 250°C |
| WHSV: | 2,25 $h^{-1}$ |
| molares Verhältnis $H_2$:n-Octan | 1,4 : 1 |

Der Reaktor wurde wie folgt eingefahren: Zuerst wurde Luft mit einer Geschwindigkeit von 33,33 ml/min bei Atmosphärendruck eingeleitet, worauf der Reaktor von Raumtemperatur auf 400°C aufgeheizt wurde. Diese Temperatur wurde 1 Std. gehalten und anschließend die Temperatur von 400°C auf 250°C abgesenkt. Dann wurde der Luftstrom unterbrochen und für 30 min durch einen Stickstoffstrom (33,33 ml/min.) ersetzt. Der Stickstoffstrom wurde anschließend für 30 min durch einen Wasserstoffstrom (33,33 ml/min.) ersetzt. Dann wurde der Druck auf 20 bar $H_2$ erhöht, worauf reines n-Octan eingeleitet und der Produktstrom gaschromatographisch analysiert wurde.

Bei diesem Test wurden die Peakflächen aller Cl- bis C8- Komponenten alle 30 min. bestimmt. Die Peakflächen aller Iso-Octane (z.B. Methylheptane, Dimethylhexane...) wurden zusammengefasst und als iso-Octan-Flächen bezeichnet. Die Parameter sind wie folgt definiert:

```
Konversion (%)        = (1 - Fläche(n-Octan)/Gesamtfläche) x 100


Selektivität (%)      = (Fläche(iso-Octan)/Gesamtfläche - Flä-
                        che(n-Octan)) x 100


Ausbeute:             = (Fläche(iso-Octan)/Gesamtfläche) x 100
```

Der Katalysator wurde 110 Std. im Mikroreaktor getestet, wobei die Aktivität und die Selektivität bei 245 und 250°C bestimmt wurden.

Der erfindungsgemäße Katalysator (Beispiel 7 in Verbindung mit Beispiel 2) zeigte eine äußerst hohe Konversionsrate von mehr als 85% und eine Selektivität nach 10 Stunden von 80% bei 250°C. Bei 245°C betrugen die Konversion 70% und die Selektivität 85%.

Im Gegensatz dazu wies der Vergleichskatalysator (Beispiel 7 in Verbindung mit Beispiel 6) eine erheblich geringere Selektivität und Konversionsrate auf. Ein gemäß Smirniotis, J. of Catalysis 182, 400-416 (1999) hergestellter Vergleichkatalysator wies bei entsprechenden Bedingungen eine sehr geringe Konversionrate auf. Erst bei höheren Temperaturen von etwa 290°C war eine akzeptable Konversionsrate und Selektivität zu beobachten.

Beispiel 11

Die in den Beispielen 1, 5 und 9 erhaltenen Feststoffe wurden durch Quecksilberporosimetrie nach DIN 66133 auf ihr spezifisches Volumen untersucht. Die Versuchsbedingungen waren dabei wie folgt:

| | |
|---|---|
| Gerät | Porosimeter 4000; Carlo Erba, IT |
| Probenvorbereitung | 30 min Vakuum bei Raumtemperatur |
| maximaler Druck | 4000 bar |
| Kontaktwinkel | 141,3 ° |
| Hg Oberflächenspannung | 480 Dyn/cm |

Die für die Proben gefundenen Werte sind in Tabelle 5 aufgeführt.

Tabelle 5: spezifisches Volumen von gemäß Beispiel 1 calcinierten Zeolithen, gemessen durch Quecksilberporosimetrie

| Porenradienbereich (nm) | Verwendung kolloidaler Kieselsäure (Bsp. 5) | | Verwendung gefällter Kieselsäure (Bsp. 9) | | Verwendung gefällter Kieselsäure (Bsp. 1) | |
|---|---|---|---|---|---|---|
| | rel. Vol.% | $mm^3$/g spez. Vol. | rel. Vol.% | $mm^3$/g spez. Vol. | rel. Vol.% | $mm^3$/g spez. Vol. |
| 1,9 - 10 | 5,5 | 27 | 14 | 141 | 17 | 139 |
| 4-10 | 0,5 | 2,5 | 12 | 121 | 14 | 115 |
| 10 - 100 | 8,3 | 41 | 40 | 403 | 36 | 295 |
| 100 - 200 | 32 | 158 | 22 | 221 | 22 | 180 |

(fortgesetzt)

| Porenradienbereich (nm) | Verwendung kolloidaler Kieselsäure (Bsp. 5) | | Verwendung gefällter Kieselsäure (Bsp. 9) | | Verwendung gefällter Kieselsäure (Bsp. 1) | |
|---|---|---|---|---|---|---|
| 200 - 1000 | 46 | 226 | 14 | 141 | 16 | 131 |
| 1000 - 7500 | 8,2 | 40 | 10 | 101 | 9 | 74 |
| Total | 100 | 492 | 100 | 1007 | 100 | 819 |

Der lockere Verbund und damit der hohe Anteil an Hohlräumen zwischen den Primärkristalliten zeigt sich bei der Quecksilberporosimetrie im Bereich der Porenradien von 1,9 bis 100 nm. Der calcinierte erfindungsgemäße Zeolith aus den Beispielen 1 und 9 zeigt bei der Quecksilberporosimetrie im Bereich von 4 bis 10 nm ein spezifisches Volumen von etwa 110 bis 125 $mm^3$/g. Das calcinierte Vergleichsbeispiel (ZSM-12 Zeolith, hergestellt unter Verwendung kolloidaler Kieselsäure, Beispiel 5) weist im Bereich von 4 bis 10 nm ein spezifisches Volumen von 2,5 $mm^3$/g auf. Im Bereich von 10 bis 100 nm besitzen die erfindungsgemäßen Zeolithe der Beispiele 1 und 9 ein spezifisches Volumen von 300 bis 400 $mm^3$/g. Der zum Vergleich herangezogene Zeolith aus Beispiel 5 zeigt im Bereich von 10 bis 100 nm ein spezifisches Volumen von 41 $mm^3$/g.

Beispiel 12

Die in den Beispielen 1, 5 und 9 erhaltenen Zeolithe wurden durch Stickstoffporosimetrie gemäß DIN 66134 auf ihre Porenradien-Verteilung untersucht. Die Versuchsbedingungen wurden dabei wie folgt nach den Angaben des Herstellers gewählt und die Auswertung nach der Methode von "Dollim./Heal" durchgeführt.

Gerät Sorptomatic 1900; Carlo Erba, IT
Probenvorbereitung 16 h / 250 °C / Vakuum

Die für die Proben gefundenen Werte sind in Tabelle 6 angegeben.

Tabelle 6: spezifisches Volumen von gemäß Beispiel 1 calcinierten Zeolithen, bestimmt durch Stickstoffporosimetrie (vgl. oben)

| | Verwendung kolloidaler Kieselsäure (Bsp. 5) | | Verwendung gefällter Kieselsäure (Bsp. 9) | | Verwendung gefällter Kieselsäure (Bsp. 1) | |
|---|---|---|---|---|---|---|
| spezifische Oberfläche $m^2$/g | 418,37 | | 393, 59 | | 439, 00 | |
| porenspezifisches Volumen $cm^3$/g bei $\mu p/p_0$= 0,9999 | 0,2176 | | 0,5614 | | 0, 4758 | |
| Porenradienbereich | spez. Vol/ Radienbereich | Anteil am Volumen | spez. Vol/ Radienbereich | Anteil am Volumen | spez. Vol/ Radienbereich | Anteil am Volumen |
| 10 - 30 Å | 0, 045 $cm^3$/g | 76 % | 0,031 $cm^3$/g | 13 % | 0, 045 $cm^3$/g | 20 % |
| 30 - 200 Å | 0,014 $cm^3$/g | 24 % | 0,211 $cm^3$/g | 87 % | 0,185 $cm^3$/g | 80 % |
| Total | 0, 059 $cm^3$/g | 100 % | 0,242 $cm^3$/g | 100 % | 0,230 $cm^3$/g | 100 % |

Die Stickstoffporosimetrie im Bereich 10 - 200 Å zeigt deutlich die Unterschiede der beiden Strukturen auf. Im Bereich sehr kleiner Poren mit einem Porenradius im Bereich von 10 - 30 Å, welche für kompakt gebaute Agglomerate charakteristisch sind, weisen sowohl der erfindungsgemäße Zeolith (Beispiele 1 und 9), als auch der als Vergleich herangezogene Zeolith aus Beispiel 5 ein Volumen von etwa 0,04 $cm^3$/g auf. Allerdings besitzen in diesem Bereich der erfindungsgemäße Zeolith nur ca. 15 % des Gesamtvolumens für den betrachteten Bereich von 10 - 200 Å, während bei Beispiel 5 in diesem Bereich das Volumen von 0,04 $cm^3$/g einem Anteil am Gesamtporenvolumen (10 - 200 Å) von 76 % entspricht. In Übereinstimmung mit der Quecksilberporosimetrie werden die Unterschiede zwischen dem erfindungsgemäßen Zeolith (Beispiele 1 und 9) und dem Beispiel 5 vor allem im Porenradienbereich von 30 - 200 Å deutlich. Der calcinierte erfindungsgemäße Zeolith zeigt bei der Stickstoffporosimetrie im Bereich von 30 - 200 Å ein spezifisches Volumen im Bereich von etwa 0,18 - 0,21 cm$^3$/g. In dem als Vergleich herangezogenen Beispiel 5 wurde in diesem Bereich ein spezifisches Volumen von nur 0,014 cm$^3$/g gefunden, womit der Zeolith aus Beispiel 5 einen deutlich geringeren Anteil an Hohlräumen zwischen den Primärkristalliten zeigt.

**Patentansprüche**

1. Zeolith vom ZSM-12 Typ, insbesondere für die Hydroisomerisierung höherer Paraffine, welcher

   (a) eine Primärkristallitgröße von $\leq 0,1$ μm; sowie
   (b) ein durch Quecksilberporosimetrie bei einem maximalen Druck von 4000 bar ermitteltes spezifisches Volumen von 30 - 200 mm$^3$/g in einem Porenradienbereich von 4 - 10 nm aufweist; und welcher weiter
   (c) hergestellt ist unter Rühren aus einer Synthesegelzusammensetzung mit

      c1) einer Aluminiumquelle
      c2) Fällungskieselsäure als Siliciumquelle
      c3) TEA$^+$ als Templat
      c4) eine Alkali- und/oder Erdalkalimetallionenquelle M mit der Wertigkeit n;
      c5) in welcher das molare Verhältnis H$_2$O : SiO$_2$ zwischen 5 und 15 gewählt ist.

2. Zeolith nach Anspruch 1, **dadurch gekennzeichnet, dass** der Zeolith in einem Porenradienbereich von 3 - 20 nm ein durch Stickstoffporosimetrie ermitteltes spezifisches Volumen von 0,05 - 0,40 cm$^3$/g aufweist.

3. Zeolith nach Anspruch 1 oder 2, **dadurch gekennzeichnet, dass** in der Synthesegelzusammensetzung ein molares SiO$_2$/Al$_2$O$_3$-Verhältnis von 50 bis 150 eingestellt ist.

4. Zeolith nach einem der vorhergehenden Ansprüche, **dadurch gekennzeichnet, dass** in der Synthesegelzusammensetzung in oxidischer Darstellungsweise ein molares Verhältnis M$_{2/n}$O : SiO$_2$ von 0,01 bis 0,045 eingestellt ist.

5. Zeolith nach einem der vorhergehenden Ansprüche, **dadurch gekennzeichnet, dass** die Primärkristallite zu einem Anteil von mindestens 30 %, vorzugsweise mindestens 60 %, insbesondere bevorzugt mindestens 90 %, zu Agglomeraten zusammengelagert sind.

6. Zeolith nach einem der vorhergehenden Ansprüche, **dadurch gekennzeichnet, dass** die Primärkristallite einen mittleren Durchmesser von 10 bis 70 nm, insbesondere von 30 bis 50 nm, aufweisen.

7. Zeolith nach einem der vorhergehenden Ansprüche, **dadurch gekennzeichnet, dass** die Agglomerate von der Agglomeratoberfläche zugängliche Hohlräume oder Zwischenräume zwischen den Primärkristalliten aufweisen.

8. Katalysator, insbesondere für die Hydroisomerisierung von höheren Paraffinen, umfassend einen Zeolith des ZSM-12 Typs nach einem der Ansprüche 1 bis 7.

9. Katalysator nach Anspruch 8, **dadurch gekennzeichnet, dass** der Katalysator eine stückige Form aufweist.

10. Katalysator nach Anspruch 8 oder 9, **dadurch gekennzeichnet, dass** der Katalysator ein Bindemittel in einer Menge von 10 bis 90 Gew.-%, vorzugsweise 20 bis 70 Gew.-%, bezogen auf das Gesamtgewicht des Katalysators enthält.

11. Katalysator nach einem der Ansprüche 8 bis 10, **dadurch gekennzeichnet, dass** der Katalysator mit zumindest einer katalytisch aktiven Komponente beladen ist.

12. Katalysator nach Anspruch 11, **dadurch gekennzeichnet, dass** die zumindest eine katalytisch aktive Komponente ein Nebengruppenmetall ist.

13. Katalysator nach Anspruch 12, **dadurch gekennzeichnet, dass** das Nebengruppenmetall ein Edelmetall ist.

14. Katalysator nach Anspruch 13, **dadurch gekennzeichnet, dass** das Edelmetall Platin ist.

**15.** Katalysator nach einem der Ansprüche 11 bis 14, **dadurch gekennzeichnet, dass** die katalytisch aktive Komponente in einem Anteil von 0,01 bis 40 Gew.-%, bezogen auf das Gesamtgewicht des Katalysators, im Katalysator enthalten ist.

**16.** Verfahren zur Herstellung eines Zeoliths des ZSM-12 Typs nach einem der Ansprüche 1 bis 7, wobei ein Synthesegel hergestellt wird, welches in wässriger Lösung bzw. Suspension enthält:

a1) eine Aluminiumquelle;
a2) Fällungskieselsäure als Siliciumquelle;
a3) TEA$^+$ als Templat;
a4) eine Alkali- und/oder Erdalkalimetallionenquelle M mit der Wertigkeit n;
a5) das molare Verhältnis $H_2O : SiO_2$ im Bereich von 5 bis 15 eingestellt ist,

das Synthesegel unter hydrothermalen Bedingungen und unter Rühren kristallisiert wird, so dass ein Feststoff erhalten wird;
der Feststoff abgetrennt wird, und
der Feststoff gegebenenfalls gewaschen und getrocknet wird.

**17.** Verfahren nach Anspruch 16, **dadurch gekennzeichnet, dass** in der Synthesegelzusammensetzung das molare Verhältnis $M_{n/2}O : SiO_2$ im Bereich von 0,01 bis 0,045 eingestellt wird.

**18.** Verfahren nach Anspruch 16 oder 17, **dadurch gekennzeichnet, dass** das molare Verhältnis $SiO_2/Al_2O_3$ im Bereich von 50 bis 150 eingestellt wird.

**19.** Verfahren nach einem der Ansprüche 16 bis 18, **dadurch gekennzeichnet, dass** die Kristallisation des Synthesegels bei Temperaturen von 120 bis 200°C, insbesondere von 140 bis 180°C, durchgeführt wird.

**20.** Verfahren nach einem der Ansprüche 16 bis 19, **dadurch gekennzeichnet, dass** der Feststoff mit demineralisiertem Wasser gewaschen wird, bis das Waschwasser eine elektrische Leitfähigkeit von weniger als 100 $\mu$S/cm aufweist.

**21.** Verfahren nach einem der Ansprüche 16 bis 21, **dadurch gekennzeichnet, dass** die Kristallisationszeit 50 bis 500 h, insbesondere 100 bis 250 h, beträgt.

**22.** Verfahren nach einem der Ansprüche 16 bis 21, **dadurch gekennzeichnet, dass** der Feststoff nach dem Trocknen zerkleinert, insbesondere granuliert oder gemahlen und calciniert wird.

**23.** Verfahren nach Anspruch 22, **dadurch gekennzeichnet, dass** die Calcinierung bei einer Temperatur von 400 bis 700°C, vorzugsweise 500 bis 600°C, für eine Dauer von 3 bis 12 h, vorzugsweise 3 bis 6 h, durchgeführt wird.

**24.** Verfahren nach einem der Ansprüche 16 bis 23, **dadurch gekennzeichnet, dass** im Zeolith des ZMS-12 Typs enthaltene austauschbare Kationen durch Behandlung mit einer wässrigen Lösung einer Ammoniumverbindung oder einer Säure ausgetauscht werden, und der nach dem Ionenaustausch erhaltene Feststoff gewaschen, getrocknet und anschließend calciniert wird.

**25.** Verfahren nach einem der Ansprüche 16 bis 24, **dadurch gekennzeichnet, dass** der Zeolith vom ZSM-12 Typ zu einem Formkörper geformt wird.

**26.** Verfahren nach Anspruch 25, **dadurch gekennzeichnet, dass** zur Formung zu einem Formkörper dem Zeolith vom ZSM-12 Typ ein Bindemittel zugesetzt wird, vorzugsweise in einer Menge von 10 bis 90 Gew.-%, insbesondere von 20 bis 70 Gew.-%, bezogen auf das Gesamtgewicht des Katalysators.

**27.** Verfahren nach einem der Ansprüche 25 oder 26, **dadurch gekennzeichnet, dass** der Formkörper mit zumindest einem Nebengruppenmetall beladen wird.

**28.** Verfahren nach Anspruch 27, **dadurch gekennzeichnet, dass** das Nebengruppenmetall ein Edelmetall, insbesondere Platin, ist.

**29.** Verwendung eines Zeoliths vom ZSM-12 Typ nach einem der Ansprüche 1 bis 7 und/oder eines Katalysators nach einem der Ansprüche 8 bis 15 zur Umsetzung organischer Verbindungen.

30. Verwendung nach Anspruch 29, **dadurch gekennzeichnet, dass** die Umsetzung organischer Verbindungen eine Reformierung, ein katalytisches oder hydrierendes Cracken, eine Isomerisierung oder Hydroisomerisierung von n-Paraffinen oder Naphthenen, eine Oligomerisierung oder Polymerisation von Verbindungen mit olefinischem oder acetylenischem Kohlenstoff, eine Alkylierung, eine Transalkylierung, eine Isomerisierung oder Disproportionierung von Aromaten und alkylsubstituierten Aromaten, eine Dehydrierung oder Hydrierung, eine Dehydratisierung oder Hydratisierung, eine Alkylierung oder Isomerisierung von Olefinen, eine Desulfurierung, ein Umsatz von Alkoholen und Ethern zu Kohlenwasserstoffen, ein Umsatz von Paraffinen oder Olefinen zu Aromaten, oder eine Erniedrigung des Fließpunktes von Einsatzstoffen, wie Gasölen, ist.

31. Verwendung nach einem der Ansprüche 29 oder 30, **dadurch gekennzeichnet, dass** der Katalysator zur Hydroisomerisierung von höheren Paraffinen, insbesondere n-Paraffinen mit mehr als 5 Kohlenstoffatomen, vorzugsweise mit mindestens 7 Kohlenstoffatomen verwendet wird.

32. Verwendung nach einem der Ansprüche 29 bis 31, **dadurch gekennzeichnet, dass** die Hydroisomerisierung in Gegenwart von Aromaten, insbesondere Benzol, durchgeführt wird.

33. Verwendung nach einem der Ansprüche 29 bis 32, **dadurch gekennzeichnet, dass** die Hydroisomerisierung bei Temperaturen unterhalb 290°C, vorzugsweise bei 230 bis 260°C, insbesondere bei 250°C, durchgeführt wird.

34. Verwendung nach einem der Ansprüche 29 bis 33, **dadurch gekennzeichnet, dass** die Hydroisomerisierung bei einem Druck im Bereich von 1 bis 50 bar, einer Flüssigraum-Geschwindigkeit (LHSV) von 0,1 bis 101 pro Stunde höhere Paraffine je Liter Katalysator durchgeführt wird.

**Claims**

1. ZSM-12 type zeolite, in particular for the hydroisomerization of higher paraffins, which has

   (a) a primary crystallite size of $\leq 0.1$ $\mu$m; and
   (b) a specific volume determined by mercury porosimetry at a maximum pressure of 4000 bar of 30 - 200 mm$^3$/g in a pore radius range of 4 - 10 nm; and which furthermore
   (c) is prepared under stirring from a synthesis gel composition with

      c1) an aluminium source
      c2) precipitation silicic acid as silicon source
      c3) TEA$^+$ as template
      c4) an alkali and/or alkaline earth metal ion source M with the valency n;
      c5) in which the molar ratio H$_2$O : SiO$_2$ is chosen between 5 and 15.

2. Zeolite according to claim 1, **characterized in that** the zeolite has a specific volume determined by nitrogen porosimetry of 0.05 - 0.40 cm$^3$/g in a pore radius range of 3 - 20 nm.

3. Zeolite according to claim 1 or 2, **characterized in that** a molar SiO$_2$/Al$_2$O$_3$ ratio of 50 to 150 is set in the synthesis gel composition.

4. Zeolite according to one of the previous claims, **characterized in that** a molar ratio M$_{2/n}$O : SiO$_2$ of 0.01 to 0.045 is set in the synthesis gel composition in oxidic form.

5. Zeolite according to one of the previous claims, **characterized in that** the primary crystallites have congregated in a proportion of at least 30%, preferably at least 60%, particularly preferably at least 90%, to form agglomerates.

6. Zeolite according to one of the previous claims, **characterized in that** the primary crystallites have an average diameter of 10 to 70 nm, in particular of 30 to 50 nm.

7. Zeolite according to one of the previous claims, **characterized in that** the agglomerates have cavities or intermediate spaces between the primary crystallites which are accessible from the agglomerate surface.

8. Catalyst, in particular for the hydroisomerization of higher paraffins, comprising a ZSM-12 type zeolite according to one of claims 1 to 7.

9. Catalyst according to claim 8, **characterized in that** the catalyst is in lump form.

10. Catalyst according to claim 8 or 9, **characterized in that** the catalyst contains a binding agent in a quantity of 10 to 90 wt.-%, preferably 20 to 70 wt.-%, relative to the total weight of the catalyst.

11. Catalyst according to one of claims 8 to 10, **characterized in that** the catalyst is charged with at least one catalytically active component.

12. Catalyst according to claim 11, **characterized in that** the at least one catalytically active component is a subgroup metal.

13. Catalyst according to claim 12, **characterized in that** the subgroup metal is a precious metal.

14. Catalyst according to claim 13, **characterized in that** the precious metal is platinum.

15. Catalyst according to one of claims 11 to 14, **characterized in that** the catalytically active component is contained in the catalyst in a proportion of 0.01 to 40 wt.-%, relative to the total weight of the catalyst.

16. Method for the preparation of a ZSM-12 type zeolite according to one of claims 1 to 7, wherein
a synthesis gel is prepared, which contains, in aqueous solution or suspension:

   a1) an aluminium source;
   a2) precipitation silicic acid as silicon source;
   a3) $TEA^+$ as template;
   a4) an alkali and/or alkaline earth metal ion source M with the valency n;
   a5) the molar ratio $H_2O : SiO_2$ is set in the range from 5 to 15,

the synthesis gel is crystallized under hydrothermal conditions and under stirring, with the result that a solid is obtained;
the solid is separated, and
the solid is optionally washed and dried.

17. Method according to claim 16, **characterized in that** in the synthesis gel composition the molar ratio $M_{n/2}O : SiO_2$ is set in the range from 0.01 to 0.045.

18. Method according to claim 16 or 17, **characterized in that** the molar ratio $SiO_2/Al_2O_3$ is set in the range from 50 to 150.

19. Method according to one of claims 16 to 18, **characterized in that** the crystallization of the synthesis gel is carried out at temperatures of 120 to 200°C, in particular of 140 to 180°C.

20. Method according to one of claims 16 to 19, **characterized in that** the solid is washed with demineralized water until the washing water exhibits an electric conductivity of less than 100 $\mu$S/cm.

21. Method according to one of claims 16 to 21, **characterized in that** the crystallization time is 50 to 500 h, in particular 100 to 250 h.

22. Method according to one of claims 16 to 21, **characterized in that** after drying the solid is comminuted, in particular granulated or ground and calcined.

23. Method according to claim 22, **characterized in that** the calcination is carried out at a temperature of 400 to 700°C, preferably 500 to 600°C, for a period of 3 to 12 h, preferably 3 to 6 h.

24. Method according to one of claims 16 to 23, **characterized in that** exchangeable cations contained in the ZMS-12 type zeolite are exchanged by treatment with an aqueous solution of an ammonium compound or an acid, and the solid obtained after the ion exchange is washed, dried and then calcined.

**25.** Method according to one of claims 16 to 24, **characterized in that** the ZMS-12 type zeolite is shaped into a shaped body.

**26.** Method according to claim 25, **characterized in that** for the shaping into a shaped body a binding agent is added to the ZMS-12 type zeolite, preferably in a quantity of 10 to 90 wt.-%, in particular 20 to 70 wt.-%, relative to the total weight of the catalyst.

**27.** Method according to one of claims 25 or 26, **characterized in that** the shaped body is charged with at least one subgroup metal.

**28.** Method according to claim 27, **characterized in that** the subgroup metal is a precious metal, in particular platinum.

**29.** Use of a ZMS-12 type zeolite according to one of claims 1 to 7 and/or of a catalyst according to one of claims 8 to 15 for the reaction of organic compounds.

**30.** Use according to claim 29, **characterized in that** the reaction of organic compounds is a reformation, a catalytic or hydrogenating cracking, an isomerization or hydroisomerization of n-paraffins or naphthenes, an oligomerization or polymerization of compounds with olefinic or acetylenic carbon, an alkylation, a transalkylation, an isomerization or disproportionation of aromatics and alkyl-substituted aromatics, a dehydrogenation or hydrogenation, a dehydration or hydration, an alkylation or isomerization of olefins, a desulphurization, a reaction of alcohols and ethers to hydrocarbons, a reaction of paraffins or olefins to aromatics, or a reduction of the flow point of feedstocks, such as gas oils.

**31.** Use according to one of claims 29 or 30, **characterized in that** the catalyst is used for the hydroisomerization of higher paraffins, in particular n-paraffins with more than 5 carbon atoms, preferably with at least 7 carbon atoms.

**32.** Use according to one of claims 29 to 31, **characterized in that** the hydroisomerization is carried out in the presence of aromatics, in particular benzene.

**33.** Use according to one of claims 29 to 32, **characterized in that** the hydroisomerization is carried out at temperatures below 290°C, preferably at 230 to 260°C, in particular at 250°C.

**34.** Use according to one of claims 29 to 33, **characterized in that** the hydroisomerization is carried out at a pressure in the range from 1 to 50 bar, a liquid hourly space velocity (LHSV) of 0.1 to 10 1 per hour of higher paraffins for each litre of catalyst.

**Revendications**

**1.** Zéolite du type ZSM-12, en particulier en vue de l'hydroisomérisation de paraffines supérieures, qui présente

(a) une taille de cristallites primaires de $\leq 0,1$ μm; ainsi que
(b) un volume spécifique, déterminé à une pression maximale de 4000 bars par porosimétrie au mercure, de 30 - 200 mm$^3$/g dans un domaine de rayons de pores de 4 - 10 nm ; et qui est en outre
(c) fabriqué sous agitation à partir d'une composition de gel de synthèse à l'aide

c1) d'une source d'aluminium
c2) d'un acide silicique de précipitation en tant que source de silicium
c3) de TEA$^+$ en tant que modèle
c4) d'une source d'ions de métaux alcalins et/ou alcalino-terreux M à valence n;
c5) dans laquelle le rapport molaire $H_2O$ : $SiO_2$ est sélectionné entre 5 et 15.

**2.** Zéolite selon la revendication 1, **caractérisée en ce que** la zéolite présente, dans un domaine de rayons de pores de 3 - 20 nm, un volume spécifique, déterminé par porosimétrie à l'azote, de 0,05 - 0,40 cm$^3$/g.

**3.** Zéolite selon la revendication 1 ou 2, **caractérisée en ce que** l'on ajuste, dans la composition de gel de synthèse, un rapport molaire $SiO_2/Al_2O_3$ de 50 à 150.

4. Zéolite selon l'une quelconque des revendications précédentes, **caractérisée en ce que** l'on ajuste, dans la composition de gel de synthèse en forme oxidique, un rapport molaire $M_{2/n}O : SiO_2$ de 0,01 à 0,045.

5. Zéolite selon l'une quelconque des revendications précédentes, **caractérisée en ce que** les cristallites primaires sont combinés sous la forme d'agglomérats à raison d'une proportion d'au moins 30 %, de préférence, d'au moins 60 %, en particulier, de préférence, d'au moins 90 %.

6. Zéolite selon l'une quelconque des revendications précédentes, **caractérisée en ce que** les cristallites primaires présentent un diamètre moyen d'environ 10 à 70 nm, en particulier d'environ 30 à 50 nm.

7. Zéolite selon l'une quelconque des revendications précédentes, **caractérisée en ce que** les agglomérats présentent des espaces creux ou des espaces intermédiaires accessibles à partir de la surface d'agglomérats.

8. Catalyseur, en particulier en vue de l'hydroisomérisation de paraffines supérieures, comprenant une zéolite du type ZSM-12 selon l'une quelconque des revendications 1 à 7.

9. Catalyseur selon la revendication 8, **caractérisé en ce que** le catalyseur présente une forme constituée de morceaux.

10. Catalyseur selon la revendication 8 ou 9, **caractérisé en ce que** le catalyseur contient un liant dans une quantité de 10 à 90 % en poids, de préférence, de 20 à 70 % en poids, par rapport au poids total du catalyseur.

11. Catalyseur selon l'une quelconque des revendications 8 à 10, **caractérisé en ce que** le catalyseur est chargé d'au moins un composant actif du point de vue catalytique.

12. Catalyseur selon la revendication 11, **caractérisé en ce que** le au moins un composant actif du point de vue catalytique est un métal d'un groupe secondaire.

13. Catalyseur selon la revendication 12, **caractérisé en ce que** le métal du groupe secondaire est un métal précieux.

14. Catalyseur selon la revendication 13, **caractérisé en ce que** le métal précieux est le platine.

15. Catalyseur selon l'une quelconque des revendications 11 à 14, **caractérisé en ce que** le composant actif du point de vue catalytique est contenu dans le catalyseur dans une proportion de 0,01 à 40 % en poids, par rapport au poids total du catalyseur.

16. Procédé en vue de la fabrication d'une zéolite du type ZSM-12 selon l'une quelconque des revendications 1 à 7, étant donné que
l'on prépare un gel de synthèse, qui contient en solution aqueuse ou en suspension :

    a1) une source d'aluminium ;
    a2) un acide silicique de précipitation en tant que source de silicium ;
    a3) $TEA^+$ en tant que modèle ;
    a4) une source d'ions de métaux alcalins et/ou alcalino-terreux M à valence n ;
    a5) le rapport molaire $H_2O : SiO_2$ étant ajusté dans le domaine de 5 à 15,

le gel de synthèse est cristallisé dans des conditions hydrothermales et sous agitation, de manière à obtenir une matière solide;
la matière solide est séparée, et
la matière solide est, le cas échéant, lavée et séchée.

17. Procédé selon la revendication 16, **caractérisé en ce que** dans la composition de gel de synthèse l'on ajuste le rapport molaire $M_{n/2}O : SiO_2$ dans le domaine de 0,01 à 0,045.

18. Procédé selon la revendication 16 ou 17, **caractérisé en ce que** le rapport molaire $SiO_2/Al_2O_3$ est ajusté dans le domaine de 50 à 150.

19. Procédé selon l'une quelconque des revendications 16 à 18, **caractérisé en ce que** la cristallisation du gel de synthèse est effectuée à des températures de 120 à 200°C, en particulier de 140 à 180°C.

20. Procédé selon l'une quelconque des revendications 16 à 19, **caractérisé en ce que** la matière solide est lavée à l'aide d'eau déionisée, jusqu'à ce que l'eau de lavage présente une conductibilité électrique de moins de 100 μS/cm.

21. Procédé selon l'une quelconque des revendications 16 à 21, **caractérisé en ce que** la durée de cristallisation est de 50 à 500 heures, en particulier de 100 à 250 heures.

22. Procédé selon l'une quelconque des revendications 16 à 21, **caractérisé en ce que** la matière solide après le séchage est fragmentée, en particulier mise sous forme de granulés ou moulue et calcinée.

23. Procédé selon la revendication 22, **caractérisé en ce que** la calcination est effectuée à une température de 400 à 700°C, de préférence, de 500 à 600°C, pour une durée de 3 à 12 heures, de préférence, de 3 à 6 heures.

24. Procédé selon l'une quelconque des revendications 16 à 23, **caractérisé en ce que** les cations échangeables contenus dans la zéolite du type ZMS-12 sont échangés par traitement à l'aide d'une solution aqueuse d'un composé d'ammonium ou d'un acide et **en ce que** la matière solide obtenue après l'échange d'ions est lavée, séchée et calcinée.

25. Procédé selon l'une quelconque des revendications 16 à 24, **caractérisé en ce que** la zéolite du type ZSM-12 est mise sous la forme d'un corps moulé.

26. Procédé selon la revendication 25, **caractérisé en ce que** en vue de la mise en forme d'un corps moulé, l'on ajoute à la zéolite du type ZSM-12 un liant, de préférence, dans une quantité de 10 à 90 % en poids, en particulier de 20 à 70 % en poids, par rapport au poids total du catalyseur.

27. Procédé selon l'une quelconque des revendications 25 ou 26, **caractérisé en ce que** le corps moulé est chargé à l'aide d'au moins un métal de groupe secondaire.

28. Procédé selon la revendication 27, **caractérisé en ce que** le métal du groupe secondaire est un métal précieux, en particulier du platine.

29. Utilisation d'une zéolite du type ZSM-12 selon l'une quelconque des revendications 1 à 7 et/ou d'un catalyseur selon l'une quelconque des revendications 8 à 15 en vue de la conversion de composés organiques.

30. Utilisation selon la revendication 29, **caractérisée en ce que** la conversion de composés organiques est un reformage, un craquage catalytique ou hydrogénant, une isomérisation ou une hydroisomérisation de n-paraffines ou de naphtènes, une oligomérisation ou une polymérisation de composés avec un carbone oléfinique ou acétylénique, une alkylation, une transalkylation, une isomérisation ou une dismutation de composés aromatiques et de composés aromatiques à substitution alkyle, une déshydrogénation ou une hydrogénation, une déshydratation ou une hydratation, une alkylation ou une isomérisation d'oléfines, une désulfuration, une réaction d'alcools et d'éthers pour former des hydrocarbures, une réaction de paraffines ou d'oléfines pour former des composés aromatiques, ou un abaissement du point de coulée des produits de départ, comme les gasoils.

31. Utilisation selon l'une quelconque des revendications 29 ou 30, **caractérisée en ce que** le catalyseur en vue de l'hydroisomérisation de paraffines supérieures, en particulier de n-paraffines, est utilisé avec plus de 5 atomes de carbone, de préférence, avec au moins 7 atomes de carbone.

32. Utilisation selon l'une quelconque des revendications 29 à 31, **caractérisée en ce que** l'hydroisomérisation est effectuée en présence de composés aromatiques, en particulier de benzène.

33. Utilisation selon l'une quelconque des revendications 29 à 32, **caractérisée en ce que** l'hydroisomérisation est effectuée à des températures en dessous de 290°C, de préférence, de 230 à 260°C, en particulier de 250°C.

34. Utilisation selon l'une quelconque des revendications 29 à 33, **caractérisée en ce que** l'hydroisomérisation est effectuée à une pression dans le domaine de 1 à 50 bars, à une vitesse spatiale liquide (LHSV) de 0,1 à 10 1 par heure de paraffines supérieures par litre de catalyseur.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5800801 A
- US 3970544 A
- DE 2213109 C2

**In der Beschreibung aufgeführte Nicht-Patentliteratur**

- **W. Zhang ; P.G. Smirniotis.** *J. Catal.,* 1999, vol. 182, 400-416
- **A. Katovic ; G. Giordano.** *Chemistry Express,* 1991, vol. 6 (12), 969-972
- **TOKTAREV A.V. ; IONE K.G.** Studies on Crystallization of ZSM-12 Type Zeolite. *STUDIES IN SURFACE SCIENCE AND CATALYSIS,* 1997, vol. 105, 333-339
- **S. Ernst ; P.A. Jacobs ; J.A. Martens ; J. Weitkamp.** *Zeolites,* 1987, vol. 7, 458-62
- *J. of Catalysis,* 1999, vol. 182, 400-416